(19) Europäisches Patentamt

European Patent Office

Office européen des brevets

(11) **EP 4 786 836 A1**

## (12) EUROPEAN PATENT APPLICATION

(43) Date of publication:
**05.08.2026 Bulletin 2026/32**

(21) Application number: **25206102.3**

(22) Date of filing: **01.10.2025**

(51) International Patent Classification (IPC):
**F16L 1/11** *(2006.01)*

(52) Cooperative Patent Classification (CPC):
**F16L 1/11**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(71) Applicant: **Trocellen GmbH
53840 Troisdorf (DE)**

(72) Inventors:
• **ARZUFFI, Marco Giancarlo
24040 Filago (IT)**
• **ALICINO, Davide
20832 Desio (IT)**
• **BISON, Alessandro
24040 Boltiere (IT)**
• **VISLAVSKI, Slavko
2014 Csobanka (HU)**

(74) Representative: **HKW Intellectual Property PartG
mbB
Theresienhöhe 12
80339 München (DE)**

(54) **EXPANSION PAD FOR A PIPE, PIPE SYSTEM, USE OF AN EXPANSION PAD AND METHOD FOR MANUFACTURING AN EXPANSION PAD**

(57) An expansion pad (3) for compensating for a length change of a pipe, in particular, a district heating/-cooling pipe (1), when embedded in soil material (2). The expansion pad (3) comprises a protection layer (5), and a compensation layer (6) having a plurality of openings (7). The protection layer (5) is configured to prevent the soil material (2) from entering the openings (7). The expansion pad (3) is configured to compensate for the length change (4) of the district heating/cooling pipe (1) along a thickness (t) of the expansion pad (3). The expansion pad (3) is bendable around the district heating/cooling pipe (1) such that the openings (7) are deformed with respect to a relaxed state of the expansion pad (3).

FIG. 1

EP 4 786 836 A1

**Description**

The present invention relates to an expansion pad for a pipe, e.g. a district heating and/or cooling pipe, a pipe system, e.g. a district heating and/or cooling pipe grid, a use of an expansion pad, and a method for manufacturing an expansion pad.

Supplying customers with heating energy is a demanding task. One option is to use waste heat from heat sources, such as manufacturing facilities, and distribute this heat to consumers, such as residential homes. A well-known solution for distributing heat is to use district heating pipes installed underground.

Conventionally, the district heating pipes carry a fluid, such as water, from the heat source, where the water is heated, to the customers. At the customer site, heat is transferred from the heated water to another medium circulating in the residential home. The heated water flows within the district heating pipe, potentially causing the district heating pipe to heat up and thus expand. Therefore, the district heating pipe embedded underground undergoes a movement. The same holds for pipes carrying a cooling fluid. Hence, it is understood that all aspects relating to pipes in a district-heating pipe environment or grid also apply for pipes in district-cooling pipe environments or grids.

To compensate for this movement, for example, a thermal elongation change, and thus prevent damage of the district heating pipe, U-shaped sections are introduced to the district heating pipe path. Usually, expansion pads are arranged on curved sections within the U-shaped section, to compensate for the movement of the district heating pipe against the surrounding soil.

Conventional expansion pads are made from foam material and may comprise multiple grooves along their length to be able to be bent around the curved sections of the district heating pipe. The grooves may be milled from foam material. Therefore, waste material is created when manufacturing the expansion pad. Conventional expansion pads have a limited thermal conductivity what limits heat dissipation.

HR UM 20220008 U2 discloses a machine for making insulating mats. Foam material is cut by cutters of the machine into strips. The strips are joined to continuous material by heat to obtain an insulating mat with grooves and reduce waste material.

It is one object of the present invention to provide an improved expansion pad, an improved (district) heating and/or cooling pipe system, an improved use of an expansion pad as well as an improved method for manufacturing an expansion pad.

According to a first aspect, an expansion pad is provided. The expansion pad is configured to compensate for a length change of a pipe, e.g. a district heating/cooling pipe when embedded in soil material. The expansion pad comprises: a protection layer, and at least one compensation layer having a plurality of openings. The protection layer is configured to prevent soil material from entering the openings. The expansion pad is configured to compensate for the length change of the pipe, e.g. the district heating/cooling pipe, along a thickness of the expansion pad. The expansion pad is bendable around the pipe such that the openings are deformed with respect to a relaxed state of the expansion pad.

It is understood that the expansion pad is suitable to be used in connection with a district heating or district cooling pipe. Throughout this disclosure, a reference to a heating pipe shall not be construed as limiting the application of the expansion pad to heating applications. Rather, the claimed expansion pad may also be considered an expansion pad for compensating for a length change of a district cooling pipe. Whenever the term "heating pipe" is used, it is intended to refer to a "cooling pipe" and system as well.

Hence, in embodiments, the pipe is a district heating pipe or a district cooling pipe.

Advantageously, by deforming the plurality of openings when bending the expansion pad around the pipe, flexibility of the expansion pad is improved.

The expansion pad can be used for a variety of shapes of the pipe. Further, surrounding soil material cannot enter the openings and impede their function.

One may refer to the expansion pad as a dilatation pad or compensation cushion.

In embodiments, the protection layer is an outer layer, or an outmost layer of the layered expansion pad. In alternative embodiments, a plurality of protection layers is comprised so that the openings and protection layers lead to voids in the expansion pad.

One may contemplate of embodiment with more than one protection layer, e.g. at the outer surfaces of the expansion pad. This may facilitate mounting the pad as no specific orientation or layer sequence needs to be put into place. In embodiments the sequence of layers is symmetric with respect to a center (layer) along the thickness direction of the expansion pad.

In embodiments the protection layer comprises a nonwoven material, e.g. a fleece sheet.

The expansion pad may be configured to compensate for a thermally induced length change of the pipe. In embodiments, expansion pads are arranged on curved sections of the district heating pipe, such as L-shaped, Z-shaped and/or U-shaped sections. For example, the expansion pad is arranged at branches, e.g., intersections, T-branches and/or Y-branches, sleeves, valves, vents, and/or on portions, wherein the district heating pipe changes its level underground, for example, high portions and/or low portions.

For example, at a branch and/or intersection, the pipe may move upwards or downwards to compensate for an evasive movement due to the length change. For example, at intersecting portions, at least two pipes intersect, in particular, in a manner, wherein respective center axes of the pipes intersect each other. For example, at a branch, one pipe splits into at least two pipes or one pipe ends in a second pipe.

In embodiments, the expansion pad has a thickness, and the expansion pad is implemented to be reversibly compressed and expanded along its thickness direction. For example, the pipe is placed within the soil material along a path. The path may comprise straight portions and curved portions. Thus, the pipe may have a curve or curved portion, for example, between two straight portions. The curved portion of the pipe may be referred to as a curved section, a curve, a bowed portion, an arched portion, and/or a bent portion. The expansion pad is implemented to allow a movement of the pipe and can be compressed against a compact soil material.

The expansion pad may be made of foam material, for example, a closed-cell, physically cross-linked particle foam made of polyethylene. Multiple expansion pads may be, e.g., stackable. The expansion pad may be provided as sheet goods. Thus, handling of the expansion pad, in particular, on a construction site, is simplified. The foam material may be, for example, elastically, compressible, in particular compressible along a thickness of the foam material, to compensate for the length change of the pipe. Foamed material can be compressed along its thickness between the pipe and soil material.

In embodiments, the protection layer and the compensation layer(s) have the same thickness. One may contemplate of embodiments where the protection layer is thinner than the compensation layer. The thickness of the protection layer is, in particular, arranged such that the entire expansion pad has sufficient flexibility to be bent around a curved surface about two distinct bending axes.

In embodiments, the expansion pad has a rectangular shape with a thickness, length and width.

The expansion pad may have a thickness in the range of 30 mm to 50 mm, preferably of 40 mm. The protection layer may have a thickness in the range of 3 mm to 7 mm, preferably 5 mm. The compensation layer may have a thickness in the range of 27 mm to 43 mm, preferably between 32 mm and 38 mm, preferably 35 mm. For example, at least two expansion pads may be attached to each other by heat bonding and/or adhering. The expansion pad may have a length in a range between 1,800 mm and 2,200 mm, preferably of 2,040 mm, and a width in a range of 800 mm to 1,200 mm, preferably of 1030 mm. One may contemplate other sizes and shapes.

In examples, the expansion pad has a thermal conductivity at 40 °C in a range of 0.02 to $0.07\frac{W}{mK}$. Thus, the expansion pad may show an improved thermal conductivity to prevent heat accumulation adjacent to a district heating pipe. It is an advantage that the expansion pad allows for efficient heat dissipation from the respective pipe into the environment. High thermal conductivity levels may reduce the risk of accumulating excessive heat at the pipe surface.

In embodiments, if the expansion pad is installed on a pipe, the thermal conductivity of the expansion pad in a radial direction is predetermined such a temperature at the pipe surface is less than 60 °C, preferably less than 50 °C, and even more preferred less than 45 °C. The conductivity of the expansion pad may be set by designing its thickness, numbers of layers and materials used as sheet material.

In embodiments, the foam material of the expansion pad has a density in the range of 25 to $35\frac{kg}{m^3}$, preferably $30\frac{kg}{m^3}$. In embodiments, the expansion pad has a density in the range of 20 to $26\frac{kg}{m^3}$, preferably between 23 to 24 $24\frac{kg}{m^3}$.

In embodiments, the expansion pad comprises stiffness according to EN 13941-1:2019+A1:2021 at 23 °C +/- 2 °C of type 2. An expansion pad with the protection layer made from a continuous polyethylene foam material, and a compensation layer with two foam layers with openings is compressed. Therefore, three test specimens of 100 mm length, 100 mm width and 40 mm thickness are, respectively, placed between a rigid support surface and a rigid compression plate. The respective test specimen is compressed vertically, along its thickness, by moving the compression plate at a velocity of $1\frac{mm}{min}$. To compress the respective specimen by 40%, a mean pressure of 62,7 kPa is required. To compress the respective specimen by 50%, a mean pressure of 85,3 kPa is required. To compress the respective specimen by 75%, a mean pressure of 254 kPa is required. For a compression of 70%, a pressure of 200 kPa is required, which may be a maximum permissible compression. The pressure values may deviate by 15%, preferably by 10%, more preferably by 5% from the respective mean value.

In a further embodiment, compression of three specimen of the expansion pad with, respectively, a length of 400 mm, a width of 250 mm and a thickness of 40 mm is carried out by placing the respective specimen between two tube shells, wherein a first of the two tube shells has a diameter of 248 mm and a second of the two tube shells has a diameter of 312 mm, for example. An expansion pad with the protection layer made from a continuous polyethylene foam material, and a compensation layer with two foam layers with openings is compressed. The compression is tested at a temperature of 40 °C measured at a side of the expansion pad specimen facing the first tube shell. Pressure is applied to the first tube shell with a velocity of $1 \frac{mm}{min}$, thus, the specimens are compressed along a radial direction normal to their thickness. At a mean value of 4.2 kPa, the specimens are compressed by 10%. At a mean value of 37.1 kPa, the specimens are compressed by 40%. At a mean value of 49.0 kPa, the specimens are compressed by 50%. The pressure values may deviate by 15%, preferably by 10%, more preferably by 5% from the respective mean value.

In embodiments, the district pipe comprises an outer diameter in a range between 20 mm to 1500 mm, preferably between 65 mm to 1300 mm.

The length change may be a contraction and/or elongation of the pipe, for example, due to a temperature change, in particular along a length direction. The pipe, when embedded in soil, may thus undergo an evasive movement forced by the length change. The movement is, in particular, along a shift direction. The expansion pad may be attached to the pipe in the shift direction, e.g., the expansion pad is clad around the pipe so that the shift direction is normal to a surface of the expansion pad.

The expansion pad may be applied to the outer casing (also termed "outer shell" herein) of the pipe. In particular, the expansion pad is arranged between the outer casing of the pipe and the soil material.

In embodiments, the compensation layer is implemented to be attached to an outer surface of the pipe, and the outer protection layer may be implemented to be attached to a soil material, in which the pipe is to be buried.

When seen from a center of the pipe, in the shift direction, the outer casing, the compensation layer, the protection layer and the soil material are arranged in this order. In other words, the protection layer may be arranged adjacent to the soil, and the compensation layer may be arranged adjacent to the pipe.

In embodiments, the openings extend along the thickness of the compensation layer, and/or can be widened or narrowed by stretching laterally the compensation layer.

In embodiments, the compensation layer is laterally stretched, and the openings are held in place by the protection layer.

Advantageously, the expansion pad may be flexibly attached to the pipe, also on curved portions of the pipe.

The openings are, in particular, through holes through the respective compensation layer. In embodiments, in a relaxed state of the expansion pad, a cross-section of the openings is constant. The compensation layer can be pre-stretched.

The openings may change their width when bending the expansion pad around the pipe. In embodiments, the openings may change their width when compensating for the length change of the pipe. In embodiments, the thickness of the compensation layer may change due to a pressure along its thickness, e.g., exercised by the pipe.

For example, when bend around the pipe, a portion of the openings adjacent to the pipe may be narrower compared to a portion of the openings distal to the pipe. In other words, in a bent state of the expansion pad, the cross-section of the openings may vary, e.g., along a bending radius.

In embodiments, the compensation layer comprises a first layer with first openings and a second layer with second openings. One may contemplate a plurality of compensation layers, e.g., three or four layers.

In embodiments, the expansion pad comprises at least two compensation layers, or a first and second layer, being fixedly attached to one another, wherein the at least two compensation layers are laterally pre-stretched and mutually hold the opening of the respective other layer open.

Advantageously, the expansion pad may be adapted to better compensate for the length change by adapting, e.g., during a design stage, the dimensions of the first openings and/or the dimensions of the second openings, individually.

In embodiments, the expansion pad comprises three layers: the protection layer, the first layer and the second layer, wherein the first layer and the second layer may form the compensation layer. In other words, one of the first and second layer may be sandwiched between the protection layer and the other one out of the first and second layer. The openings of the first layer and the openings of the second layer are not congruent to each other.

In embodiments, the compensation layer is in a stretched state along a lateral direction with respect to its thickness and fixedly attached to the protection layer. In particular, the first layer and/or the second layer may be fixedly attached to one another and/or to the protection layer in a stretched state.

Advantageously, manufacturing of the expansion pad is simplified. Further, mounting the pad to a respective pipe is facilitated.

For example, the expansion pad, the compensation layer, and/or the protection layer, respectively, comprise a length, a width and a thickness, wherein the length and the width form a plane. The expansion pad may essentially extend within the plane. The compensation layer may be stretched within the plane and may be fixed in the stretched state by another compensation layer and/or the protection layer.

In embodiments, the expansion pad is bendable around two axes.

Thus, the expansion pad is easily applied to a curved portion of the pipe. The expansion pad may be formed and attached to a bent surface, e.g. of a curved district heating/cooling pipe.

One axis out of the two axes may be an axis parallel to a length of the expansion pad, wherein the other one out of the two axes may be an axis parallel to the width of the expansion pad, e.g. when the expansion pad has a rectangular shape.

For example, in a state of the expansion pad bent around the pipe, in particular a curved portion thereof, one axis out of the two axes may be an axis parallel to a center axis and/or length of the pipe, wherein the other one out of the two axes may be an axis around which the curved portion of the pipe extends.

In embodiments, the protection layer is a continuous layer of foam.

Advantageously, the protection layer prevents soil from interfering with the compensation layer, in particular, the openings of the compensation layer.

In embodiments, the openings are formed by stretched slits introduced into the compensation layer. Hence, one may refer to laterally stretched slits instead of openings.

Thus, the openings may have a greater length compared to a width.

Advantageously, by forming the openings in the described way, material waste when manufacturing the expansion pad is reduced.

In embodiments, the openings are obtained by stretching slits in the respective sheet along a first and a second direction, e.g. X and Y directions. The stretching amount along the two directions may differ. For example, in a first direction, an opening has an extension of 10, 12, or 16 mm, and at the same time, in a second direction an extension of 47, 46, or 45 mm, respectively.

The volume occupied by the expansion pad includes void regions formed by the stretched openings.

In embodiments, the slits are arranged in parallel. Parallel slits allow for efficient manufacturing thereof.

Advantageously, the expansion pad may be easily bent.

The respective slits may be arranged along a respective (virtual) line, wherein the line may be parallel to an adjacent (virtual) line. Multiple slits may be arranged along one (virtual) line with an offset to each other. The respective slits of a first (virtual) line may be offset to respective slits of adjacent (virtual) lines. Thus, the slits may not intersect.

In embodiments, the slits comprise first slits extending in a first direction and second slits extending in a second direction, wherein the first and second direction comprise an angle between 30° to 90°. In embodiments, slits are straight and separate from one another.

Advantageously, the expansion pad is easily bent about two spatial axes. Thus, the expansion pad may be easily bent about a curved section of the pipe and circumferentially about the pipe.

In embodiments, the slits extending in the first and/or second direction are offset to each other. For example, the slits, in particular the first and second slits, do not intersect. In embodiments, a respective first and/or second slit is offset to a respective neighboring first and/or second slit.

In particular, a first slit is arranged in between and/or intersects a (virtual) line between two adjacent second slits.

In embodiments, the openings have a rhomboid and/or lenticular shape. In embodiments, the openings have a polygon-shape.

For example, when the slits extend in a single direction, the slits may have a lenticular shape. For example, the first and second slits comprise the rhomboid shape.

It is an advantage to slit the initial continuous compensation layer material. No waste material occurs.

According to a further aspect, a pipe system, in particular, a district heating and/or cooling pipe system is provided. The pipe system comprises at least one pipe and an expansion pad according to any one of the embodiments of the first aspect. The pipe may exhibit a length change in response to a temperature variation. The length change results in an evasive movement. The expansion pad is arranged at the pipe to compensate for the evasive movement, in particular, against a soil material.

The pipe may be an insulated pipe, a pre-insulated pipe, and/or a bonded pipe, in particular, a district heating and/or cooling pipe. In embodiments, the district heating/cooling pipe comprises a steel pipe or service pipe, wherein a fluid, e.g., water, flows within the pipe, a thermal insulating layer and an outer casing. The district heating/cooling pipe may have, at least in parts, a circular, round, and/or curved cross-section.

The evasive movement occurs along a shift direction. In embodiments, the shift direction may be along a length and/or center axis of a portion of the pipe, e.g. the district heating/cooling pipe.

In embodiments, for example at a branch and/or intersection portion, the evasive movement may involve a direction perpendicular to the length and/or center axis of the pipe or a portion of the pipe.

In embodiments, the pipe has a curved cross-section enclosed by an outer shell of the pipe, and the expansion pad is attached to the outer shell in a bent fashion.

In embodiments, the pipe has a curve with a radius, and the expansion pad is attached to an outer shell of the pipe at the curve radially outwards.

In embodiments, expansion pads are attached to the outer shell of the pipe at the curve radially outwards and radially inwards. If the evasive movement is along the radius of the curve, the expansion pad may allow such. During the evasive movement, the radius may change, while the soil remains at its position.

The curve may, when seen from a top view, form a circular segment. "Radially" may thus be related to a center point of the circular segment about which the circular segment is curved, wherein "outward" may be a direction away from the center point, wherein "inward" may be a direction towards the center point.

At branches, for example, expansion pads are attached at curves of portions of pipes and/or at an outer shell along a (virtual) center line of one of the pipe portions.

In embodiments, the heating pipe and the expansion pad are embedded in a soil material such that the expansion pad is compressible between the soil material and the pipe along its thickness. For example, the expansion pad acts as a spring. Thus, the expansion pad may compensate for the evasive movement of the pipe.

The pipe system, e.g. the district heating and/or cooling pipe system may further comprise the soil material. The respective pipe and/or the expansion pad may be embedded in the soil material. The soil material may comprise sand, soil, gravel, stones, and/or roots. In embodiments, the soil forms a compacted body around the pipe and the expansion pad.

The soil material may prevent movement of the pipe and/or the expansion pad. In other words, the soil material stationarily fixes the pipe and/or the expansion pad.

For example, when a district heating/cooling pipe is embedded in the soil material, the soil material locks all degrees of freedom of the district heating/cooling pipe. When installing an expansion pad in the herein described way, the district heating/cooling pipe may gain a degree of freedom. The expansion pad thus allows for a movement of the respective pipe by compression of the expansion pad, for example.

In embodiments, the expansion pad is fixated at the pipe in a bent state with fixation means.

The fixation means may be wrapped round the expansion pad, after arranging the expansion pad on the pipe in the herein described fashion. In embodiments, the fixation means may comprise adhesive, strips, cords, foam material, and/or a sleeve.

According to a further aspect, a use of an expansion pad in a pipe system, in particular in a district heating and/or cooling pipe system, comprising at least one pipe, wherein the expansion pad is arranged at the pipe for compensating the evasive movement, is provided.

In embodiments, the expansion pad is arranged around the pipe such that a thermal path runs radially from the pipe through layers of the sheet material. Along the thermal path, heat may dissipate between the soil and the pipe or vice versa. Preferably the thermal path runs through foamed plastics material.

According to a further aspect, a method for manufacturing an expansion pad to compensate for a length change of a pipe when embedded in soil material, is provided. The expansion pad comprises: a protection layer, and a compensation layer having a plurality of openings. The protection layer is configured to prevent the soil material from entering the openings. The expansion pad is configured to compensate for the length change of the district heating pipe along a thickness of the expansion pad. The expansion pad is bendable around the pipe such that the openings are deformed with respect to a relaxed state of the expansion pad. The method comprises:

> providing a first and a second sheet material comprising a foamed plastic material;
> forming openings into the second sheet material for implementing the compensation layer; and
> attaching the first sheet material to the second sheet material having the openings, the first sheet material implementing the protection layer.

The method, in particular, comprises at least one of the steps of:

> cutting slits into the second sheet material;
> stretching the second sheet material having the openings; and/or
> fixedly attaching the first sheet material and the second sheet material having the openings or slits with one another, wherein the second sheet material is in a stretched state.

Advantageously, by forming the openings from slits instead of, e.g., grooves, waste material when manufacturing is reduced. Slits are easier to create than holes.

Joining may comprise heat bonding, laminating and/or adhering, e.g. using hot melt, glue and/or resin.

The compensation layer is, in particular, laterally pre-stretched. In other words, the compensation layer is stretched in a length direction and/or a width direction of the compensation layer to obtain the stretched state.

In embodiments, the material of the expansion layer and/or of the protection layer, the first and/or second sheet material is or includes a foamed plastics material. Preferably, the foamed plastics material is a closed cell polyolefin foam. The foamed plastics material is, in particular, a bio-based cross-linked polyolefin foam. The foamed plastics material may contain raw materials derived from biomass, e.g. sugar cane.

In further embodiments, the foamed plastics material comprises recycled plastics material at a predetermined content, e.g. in terms of a mass percentage.

In embodiments, the material of the expansion layer and/or of the protection layer, the first and/or second sheet material comprises an additive and/or filler material for increasing its thermal conductivity. Additive and/or filler materials may comprise calcium carbonate, boron nitride, aluminum nitride, silicon carbide, metal particles and/or zinc oxide.

The embodiments and features described with reference to the first aspect of the present invention apply mutatis mutandis to the further aspects of the present disclosure.

Further possible implementations or alternative solutions to the problem encompass combinations - that are not explicitly mentioned herein - of features described above or below with regard to the embodiments. The person skilled in the art may also add individual or isolated aspects and features to the most basic form of the expansion pad.

Further embodiments, features and advantages of the present invention will become apparent from the subsequent description and dependent claims, taken in conjunction with the accompanying drawings, in which:

Fig. 1     shows an embodiment of a district heating pipe system;

Fig. 2     shows a section II-II of Fig. 1a);

Fig. 3     shows a side view of the expansion pad according to a first embodiment;

Fig. 4     shows method steps of an embodiment for a method for manufacturing an expansion pad;

Fig. 5     shows a first sheet material and a second sheet material according to a first embodiment;

Fig. 6     shows in Fig. 6a) and Fig. 6b), respectively, a top view of the second sheet material according to a first embodiment;

Fig. 7     shows in Fig. 7a) and Fig. 7b), respectively, a top view of the second sheet material according to a second embodiment; and

Fig. 8     shows a first sheet material and a second sheet material according to a second embodiment.

In the Figures, like reference numerals designate like or functionally equivalent elements, unless otherwise indicated.

Even though, a district-heating pipe application of the expansion pad is as a potential embodiment, the aspects of the disclosed expansion pad, pipe system and use of an expansion pad also apply to cooling applications, e.g. in district-cooling pipe systems.

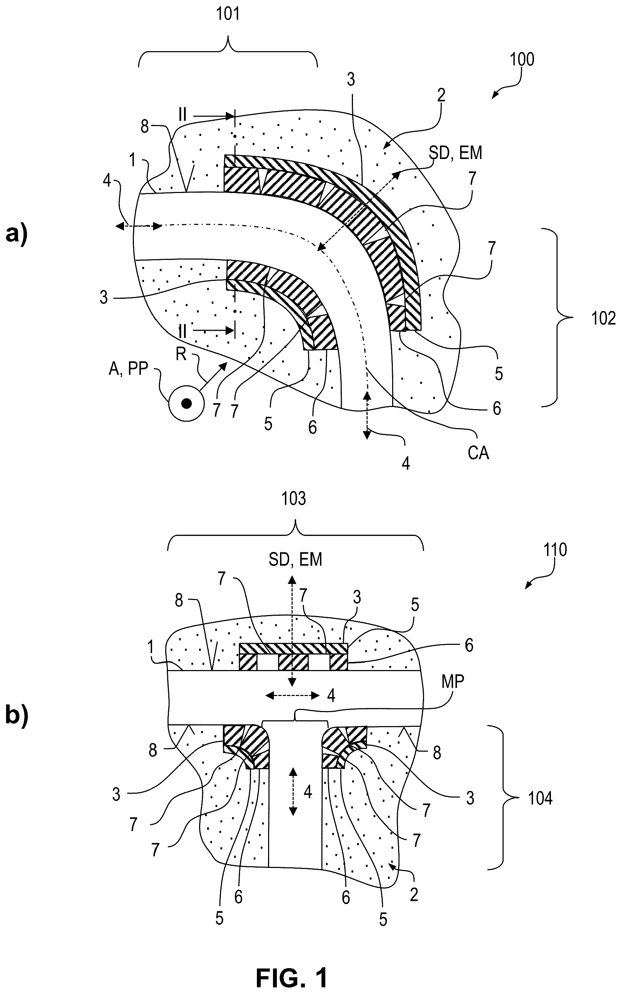

Fig. 1 shows, respectively, in Fig. 1a) and Fig. 1b) a first and second embodiment of a district heating pipe system 100, 110 with a section of a district heating pipe 1. The district heating pipe 1 is embedded in soil 2 and is, for example, configured to allow for a flow of water (not shown) within the district heating pipe 1. Fig. 1a) shows a curved portion, and Fig. 1b) shows a T-branch.

Fig. 1a) and Fig. 1b) show expansion pads 3, as part of the district heating pipe system 100, 110, arranged at the district heating pipe 1. The expansion pads 3 are, as shown in Fig. 1a), bent around the curved portion of the district heating pipe 1. Fig. 1b) shows expansion pads 3 arranged around the T-branch of the district heating pipe 1.

The water flowing within the district heating pipe 1 is supplied by a heating source, not shown in Fig. 1, and may be supplied to a customer site (not shown), such as a residential house and/or a commercial building, for example, for heating the house and/or building. Thus, the water may comprise a higher temperature compared to an ambient temperature of, for example, the soil 2. The water temperature may vary over time.

By flowing within the district heating pipe 1, the water warms the district heating pipe 1. Thus, the district heating pipe 1 undergoes a length change, indicated by the arrows 4. For example, the district heating pipe 1 undergoes a thermal expansion and/or contraction when the water flows within the district heating pipe 1 and thus moves. The surrounding soil 2 prevents a movement of the district heating pipe 1. To prevent critical stress due to the prevented movement of the district heating pipe 1, the expansion pads 3 are arranged between the district heating pipe 1 and the soil 2, which is explained in the following in more detail.

In the curved portion of the district heating pipe 1 in the district heating pipe system 100, two portions 101, 102 meet. Thus, the length change 4 of each portion 101, 102 results in an evasive movement EM in a shift direction SD. The evasive movement EM is prevented by the surrounding soil 2. The expansion pad 3 is attached to the outer shell of the district heating pipe 1 in the curved portion of Fig. 1a) in the shift direction SD to compensate for said evasive movement EM, thus, the district heating pipe 1 can execute the evasive movement EM in the shift direction SD.

In the district heating pipe system 100, the district heating pipe 1 forms a circular section and is arranged about a pivot point PP. The expansion pad 3 is arranged at the district heating pipe 1 in a radial direction R radially outward and inward, between the district heating pipe 1 and the soil 2.

In the district heating pipe system 110 of Fig. 1b), the district heating pipe 1 comprises a T-branch, thus one district heating pipe portion 103 merges into another district heating pipe portion 104 at a merging portion MP. The length change 4 of each portion 103, 104 is along its respective length. The expansion pad 3 is thus arranged on an outer shell at the merging point MP, and at a pipe section opposite the merging portion MP.

In both embodiments of the district heating pipe system 100, 110, the expansion pads 3 are configured to compensate for the evasive movement EM due to the length change 4, and thus are compressed in the shift direction SD.

In the embodiments shown in Fig. 1a) and Fig. 1b), the expansion pads 3 comprise an outer protection layer 5 and one compensation layer 6 with a plurality of openings 7, in particular passage openings or through holes.

The expansion pad 3 may be made from foam, for example polyethylene, PE, foam.

The outer protection layer 5 is a continuous foam layer and prevents the soil 2 from entering the openings 7. When deforming the expansion pad 3, for example, when bending the expansion pad 3 around the district heating pipe 1, in particular the curves and/or branches, the openings 7 are deformed.

As shown in Fig. 1, multiple expansion pads 3 are arranged, e.g., in curved sections (Fig. 1a)) or at T-branches (Fig. 1b) between an outer shell 8 of the district heating pipe 1 and the soil 2. By compressing, the expansion pad 3 a critical stress within the district heating pipe 1 is avoided, which would, for example, damage the district heating pipe 1 and thus lead to a leakage of the hot water.

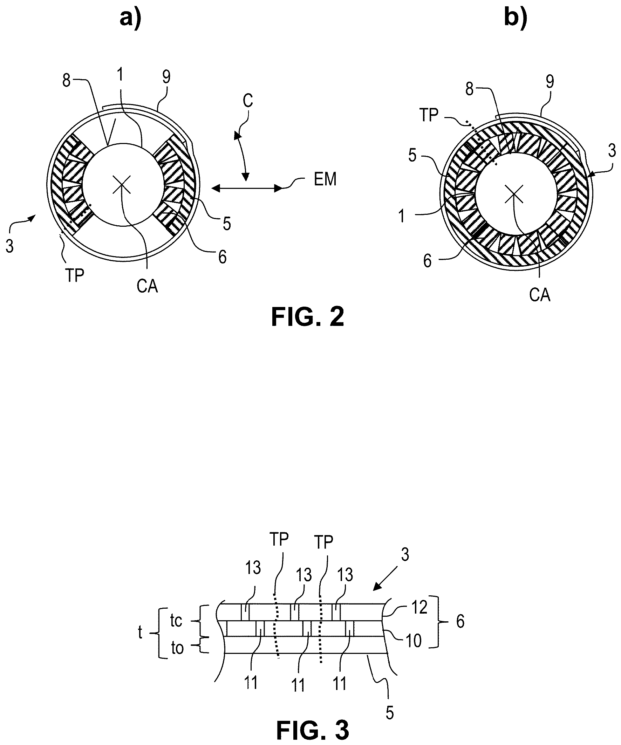

Fig. 2 shows Fig. 2a) and Fig. 2b) embodiments of how the expansion pad 3 may be arranged about the district heating pipe 1 at a section II - II of the embodiment of Fig. 1a). The district heating pipe 1 has a curved cross-section enclosed by the outer shell 8. The outer shell 8 is, for example, a plastic material wrapped around the district heating pipe 1.

Thus, the expansion pad 3 is bent about two axes, when attached to the district heating pipe 1: a center axis CA and an axis A extending perpendicularly to the radial direction R through the pivot point PP (see Fig. 1a)). In other words, the expansion pad 3 is attached to the outer shell 8 in a circumferential direction C, bent about the central axis CA, and about an axis perpendicular to a plane (see view of the district heating pipe system in Fig. 1a)) spanned by the central axis CA in a curved portion of the district heating pipe 1.

As shown in Fig. 2a), the expansion pad 3 is arranged, in the direction of the evasive movement EM on side portions of the district heating pipe 1. The expansion pad 3 is fixed to the district heating pipe 1 by fixation means 9. The fixation means 9 is a wrapping material.

Fig. 2b) shows the expansion pad 3 fully covering an outer circumference of the district heating pipe 1.

Seen from the central axis CA radially outwards, the following sequence is implemented, when the expansion pad 3 is attached to the district heating pipe 1: the outer shell 8 of the district heating pipe 1, the compensation layer 6, the protection layer 5, and the soil 2.

It is desirable to have a dissipative heat transfer between the pipe and the surrounding material, e.g. soil. For example, heat paths TP run through the expansion pad 3 along the plastics material layers 5, 6. Exemplary thermal paths are shown as radial dotted lines. For example, the protections layer 5 and the protection layer 6 include particles or fillers that enhance thermal conductivity.

Fig. 3 shows a side view of an embodiment of the expansion pad 3 prior to attaching the expansion pad 3 to a curved surface. The expansion pad 3 is, contrary to the embodiments shown in Fig. 1 and Fig. 2, in a flat state. By bending the expansion pad 3 of Fig. 3, the expansion pad 3 can be attached to the district heating pipe 1, thus the expansion pad 3 shown in Fig. 3 is attachable to the outer shell 8 of the district heating pipe 1.

The expansion pad 3 comprises three layers: a continuous layer of foam material, which implements the outer protection layer 5, a first layer 10 with first openings 11 and a second layer 12 with second openings 13, which implements the compensation layer 6. The first and second openings 11, 13 are, when seen from a top view, shifted. In other words, a first opening 11 and a second opening 13 are not congruent. Hence, a thermal path TP may occur, that runs through along the thickness t of the compression pad 3 and enhances thermal dissipation. The expansion pad, in particular, fulfills standard regulations, e.g. temperatures at the district heating pipe surface remain less than 50 °C due to heat dissipation into the soil.

In particular, the expansion pad is designed to comply with requirements according to the "Montagehandbuch für Fernwärmeleitungen", section "Dehnpolster" of Bundesverband Fernwärmeleitungen BFW e.V., Germany at the time of filing this application.

The first layer 10, the second layer 12 and the outer protection layer 5 are fixedly connected to each other, for example, by laminating and/or adhering. The expansion pad 3 has an overall thickness t of 40 mm. The outer protection layer 5 has a thickness to of 5 mm. The compensation layer 6 has a thickness tc of 35 mm, wherein the first and second layer 10, 13 are equally thick. In alternative embodiments, the first and second compensation layers have different thicknesses.

The expansion pad 3 has the properties according to table 1:

EP 4 786 836 A1

Table 1: mechanical values of the foam material and an embodiment of the expansion pad

| Polyethylene foam material of the compensation layer and the protection layer: | closed-cell, cross-linked foam made from polyethylene, PE |
|---|---|
| Density of the PE foam material: | 25 to 35 [kg/m$^3$] |
| Density of the expansion pad with the protection layer and the first and second layer implementing the compensation layer: | 20 to 26 [kg/m$^3$] |
| Thermal conductivity at 40 °C: | 0,02 to 0,07 [W/mK] |
| Stiffness of three specimens of 100 mm length, 100 mm width and 40 mm thickness of the expansion pad having the protection layer and the first and second layer implementing the compensation layer according to EN 13941-1:2019+A1:2021 at 23 °C+/-2 °C: | type 2 (medium stiffness) |
| | 40% compression at a mean value of 62,7 kPa |
| | 50% compression at a mean value of 85,3 kPa |
| | 75% compression at a mean value of 254 kPa |
| Functional compression test with two tube shells of D1 = 248 mm and D2 = 312 mm at 40 °C with three specimens of the expansion pad with the protection layer and the first and second layer: | 10% compression: 4,2 kPa |
| | 40% compression: 37,1 kPa |
| | 50% compression: 49,0 kPa |

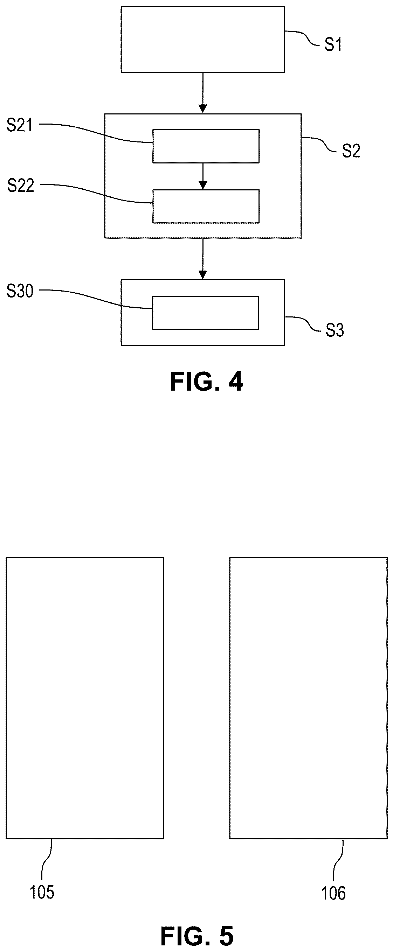

Fig. 4 to Fig. 8 describe a method for manufacturing the expansion pad.

Fig. 4 shows a flow chart for an embodiment of a method for manufacturing the expansion pad 3, including method steps S1, S2, and S3.

In method step S1, shown in Fig. 5, a first and a second sheet material 105, 106 are provided. The first and second sheet material 105, 106 are a continuous sheet of PE foam material, as shown in Fig. 5.

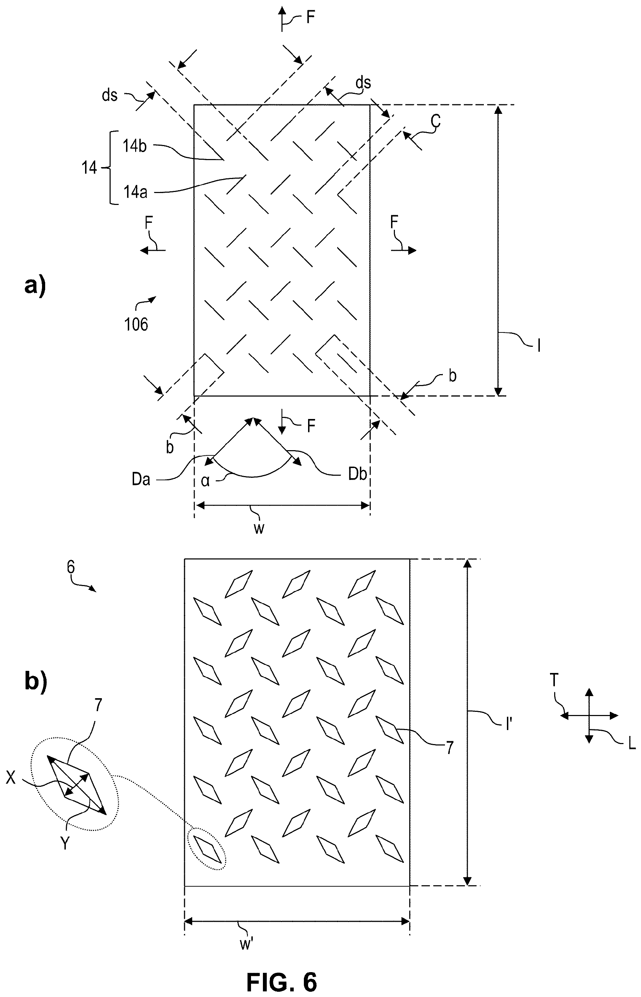

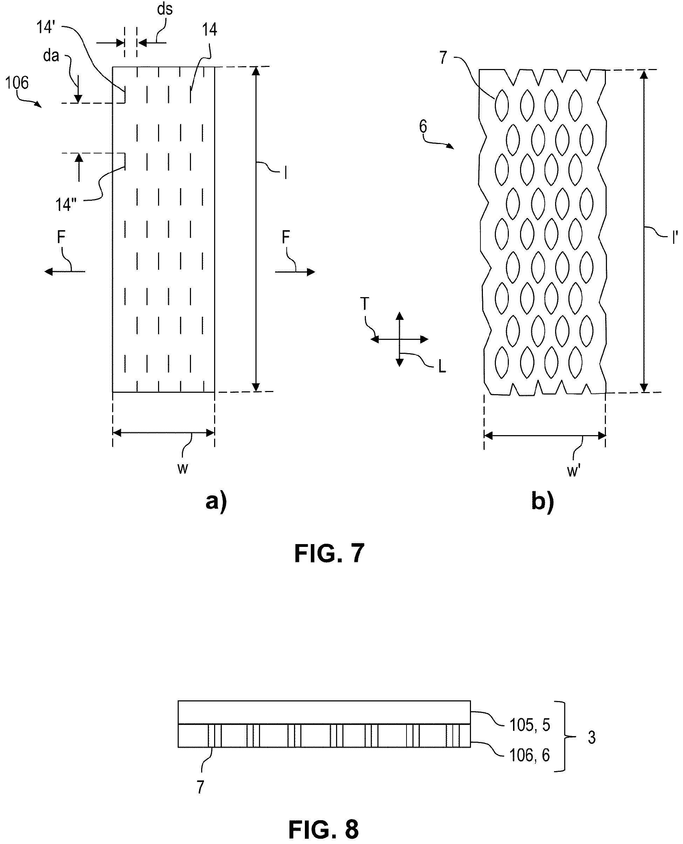

In method step S2, the openings 7 are formed into the second sheet material 106 to implement the compensation layer 6. Method step S2 comprises method steps S21 and S22, which will be explained in further detail with regard to Fig. 6 and Fig. 7.

In method step S21, slits 14 are cut into the foam material of the second sheet material 106. The slits 14 extend along the thickness tc and thus through the second sheet material 106. In the method step S22, the second sheet material 106 is stretched to obtain the openings 7 from the slits 14. The sheets 105, 106 have a rectangular shape with a length 1 and a width w.

Fig. 6 shows in Fig. 6a) and Fig. 6b), respectively, a top view of the second sheet material 106 according to an embodiment before and after being stretched in the method step S22. The second sheet material 106 comprises slits 14, with first slits 14a extending in a first direction Da and second slits 14b extending in a second direction Db. The first and second directions Da, Db include an angle α to each other. The angle α has a value of 90°.

The first slits 14a and/or second slits 14b extend within the first direction Da and/or second direction Db parallel to adjacent first slits and/or second slits with a distance ds of 3.5 cm. The first and second slits 14a, 14b have a length b of 5 cm. The first slits 14a are arranged alternating and offset with the second slits 14b (as well as the second slits 14b with the first slits 14a), wherein a free space c of 1 cm remains between the end of each of the respective slits 14a, 14b.

In method step S22, the second sheet material 106 is stretched, for example, by applying a force F. After laterally stretching the slits 14, the openings 7 occur. Thus, the first and second slits 14a, 14b are widened and openings 7 are obtained (see Fig. 6b)). Each slit 14a, 14b is transferred into an opening 7. The openings 7 have a rhomboid shape. After stretching the second sheet material 106, the compensation layer 6 is obtained. The compensation layer 6 has a length l' which is greater compared to the length l of the second sheet material 106, extending in a lateral direction L. The length l' is 2040 mm. The compensation layer 6 has a width w', which is greater than the width w of the second sheet material 106. The width w' extends in a transversal direction T and is 1030 mm.

In Fig. 6 b) one opening is enlarged to illustrate the X and Y extensions of the openings obtained by stretching the sheet 106 of Fig. 6a). The stretching amount along the two directions may differ, and dimensions of the openings may vary, e.g. along the X extension between 10 mm and 16 mm and along the Y direction between 45 mm and 47 mm.

Fig. 7 shows Fig. 7a) and Fig. 7b), respectively, a top view of the second sheet material 106 (Fig. 7a)) and compensation layer 6 (Fig. 7b)) according to an alternative embodiment before and after being stretched.

The second sheet material 106 has a length l and a width w. The slits 14 introduced into the second sheet material 106 in Fig. 7a) are arranged in parallel and run along the lateral direction L. The slits 14 have a distance ds to a neighboring, parallel slit 14. A slit 14' has a distance da to a following slit 14" within one straight line. The distance da has values between 2 mm to 7 mm. The second sheet material 106 is stretched by force F to obtain the lenticular-shaped openings 7, and thus the compensation layer 6, which is shown in Fig. 7b). After stretching, the length l' of the compensation layer 6 is equal to the length l of the second sheet material. The width w' of the compensation layer 6 is greater compared to the width w of the second sheet material 106. Laterally stretched slits form the openings 7,

In method step S3 (see Fig. 4), the first sheet material 105 is attached to the second sheet material 106 with the openings 7, and thus the expansion pad 3 is obtained. The first sheet material 105 implements the outer protection layer 5 and the second sheet material 106 implements the compensation layer 6. Method step S3 comprises method step S30, in which the first sheet material 105 and the second sheet material 106 are fixedly attached to each other. While attaching in method step S30, the second sheet material 106 is in a stretched state, as explained above.

In further embodiments (not shown), two second sheet material are provided according to method step S1 and openings are introduced into the respective second sheet material, according to method step S2. The two second sheet materials are laminated to each other as well as to the outer protection layer, so that an expansion pad 3 according to the embodiment shown in Fig. 3 is obtained.

In embodiments, the sheet materials are made from a bio-based and cross-linked polyethylene foam material. For example, a respective material can be obtained from Trocellen GmbH, Germany, under the brand name TR-EECell. Alternatively, one may use conventional foam sheets, e.g. extruded polypropylene foam sheets. In order to enhance the expansion pad's thermal conductivity, thermally conductive fillers may be deployed in the foamed material.

Although the present invention has been described in accordance with preferred embodiments, it is obvious for the person skilled in the art that modifications are possible in all embodiments.

The curved section of the district heating pipe 1 is for example comprised of a U-shaped bend. In embodiments a L-shaped or Z-shaped bend comprises the curved section.

In other embodiments of the district heating pipe 1, expansion pads are bent on reducing sleeves, end sleeves, valves, (air) vents, and/or in section, wherein the district heating pipe changes its level while embedded in soil, such as high sections and/or low sections.

In embodiments, the compensation layer is implemented by more than two layers. For example, the expansion pad comprises more than one protection layer. The protection layer may be arranged between two layers of the compensation layer.

In embodiments, the expansion pad 3 comprises three layers with an equal thickness, wherein one layer has a thickness of $\frac{40}{3}$ mm .

Although explained with respect to district heating systems, the disclosed compression pad is also applicable in cooling district systems and the deployed pipes.

REFERENCE NUMERALS

| | |
|---|---|
| 1 | district heating pipe |
| 2 | soil |
| 3 | expansion pad |
| 4 | length change |
| 5 | outer protection layer |
| 6 | compensation layer |
| 7 | openings |
| 8 | outer shell |
| 9 | fixation means |
| 10 | first layer |
| 11 | first openings |
| 12 | second layer |
| 13 | second openings |
| 14 | slits |
| 14a | first slits |
| 14b | second slits |
| 100, 110 | district heating pipe system |
| 101 | pipe portion |
| 102 | pipe portion |
| 103 | pipe portion |
| 104 | pipe portion |
| 105 | first sheet material |
| 106 | second sheet material |

A       axis
b       length
c       free space
C       circumferential direction
CA      central axis
da      distance
ds      distance
Da      first direction
Db      second direction
EM      evasive movement
F       force
l       length
L       lateral direction
PP      pivot point
R       radial direction
SD      shift direction
t       thickness
tc      thickness
to      thickness
T       transversal direction
TP      thermal path
w       width
X, Y    extension of opening
α       angle

S1      method step, providing a first and a second sheet material
S2      method step, forming openings into a second sheet material to implement a compensation layer
S3      method step, attach the first and second sheet material
S21     method step, cut slits into the second sheet material
S22     method step, stretch the second sheet material to obtain openings
S30     method step, fixedly attach the first and second sheet material in a stretched state

**Claims**

1.  An expansion pad (3) for compensating for a length change of a pipe (1) when embedded in soil material (2), wherein the expansion pad (3) comprises:

    a protection layer (5), and
    a compensation layer (6) having a plurality of openings (7),
    wherein the protection layer (5) is configured to prevent soil material (2) from entering the openings (7), wherein the expansion pad (3) is configured to compensate for the length change (4) of the pipe (1) along a thickness (t) of the expansion pad (3), wherein the expansion pad (3) is bendable around the pipe (1) such that the openings (7) are deformed with respect to a relaxed state of the expansion pad (3).

2.  The expansion pad according to claim 1, wherein the openings (7) extend along the thickness (tc) of the compensation layer (6), and/or can be widened or narrowed by stretching laterally the compensation layer (6).

3.  The expansion pad according to claim 1 or 2, wherein the compensation layer (6) comprises a first layer (10) with first openings (11) and a second layer (12) with second openings (13).

4.  The expansion pad according to any one of claims 1 to 3, wherein the compensation layer (6) is in a stretched state along a lateral direction (L) with respect to its thickness (tc) and fixedly attached to the protection layer (5), in particular, the first layer (10) and/or the second layer (12) are fixedly attached to one another and/or to the protection layer (5) in a stretched state.

5.  The expansion pad according to any one of claims 1 to 4, wherein the expansion pad (3) is bendable around two axes (CA, A).

6. The expansion pad according to any one of claims 1 to 5, wherein the protection layer (5) is a continuous layer of foam.

7. The expansion pad according to any one of claims 1 to 6, wherein the openings (7) are formed by stretched slits (14) introduced into the compensation layer (6).

8. The expansion pad according to claim 7,

wherein the slits (14) are arranged in parallel; or
wherein the slits (14) comprise first slits (14a) extending in a first direction (Da) and second slits (14b) extending in a second direction (Db), wherein the first and second direction (Da, Db) comprise an angle ($\alpha$) between 30° to 90°.

9. The expansion pad according to any one of claims 1 to 8, wherein the openings (7) have a rhomboid and/or lenticular shape.

10. A pipe system (100), comprising at least one pipe (1) and an expansion pad (3) according to any one of claims 1 to 9, wherein the pipe (1) exhibits a length change (4) in response to a temperature variation, the length change (4) resulting in an evasive movement (EM), wherein the expansion pad (3) is arranged at the pipe (1) for compensating the evasive movement (EM).

11. The pipe system (100) of claim 10, wherein the pipe (1) has a curved cross-section enclosed by an outer shell (8) of the pipe (1), and the expansion pad (3) is attached to the outer shell (8) in a bent fashion.

12. The pipe system (100) of claim 10 or 11, wherein the pipe (1) has a curve with a radius (R), and the expansion pad (3) is attached to an outer shell (8) of the pipe (1) at the curve radially outwards.

13. The pipe system (100) of any one of claims 10 to 12, wherein the pipe (1) and the expansion pad (3) are embedded in a soil material (2) such that the expansion pad (3) is compressible along its thickness (t) between the soil material (2) and the pipe (1).

14. Use of an expansion pad (3) according to any one of claims 1 to 9 in a pipe system (100) according to any one of claims 10 to 13.

15. A method for manufacturing an expansion pad according to any one of claims 1 to 9, comprising:

providing (S1) a first and a second sheet material (105, 106) comprising a foamed plastic material;
forming (S2) openings (7) into the second sheet material (106) for implementing the compensation layer (6); and
attaching (S3) the first sheet material (105) to the second sheet material (106) having the openings (7), the first sheet material (105) implementing the protection layer (5),
wherein the method, in particular, comprises at least one of the steps of:

cutting (S21) slits (14) into the second sheet material (106);
stretching (S22) the second sheet material (106) having the openings (7); and/or
fixedly attaching (S30) the first sheet material (105) and the second sheet material (106) having the openings (7) or slits (14) with one another, wherein the second sheet material (106) is in a stretched state.

**FIG. 1**

a)

b)

**FIG. 2**

**FIG. 3**

**FIG. 4**

**FIG. 5**

**FIG. 6**

**FIG. 7**

**FIG. 8**

Europäisches
Patentamt

European
Patent Office

Office européen
des brevets

## EUROPEAN SEARCH REPORT

**Application Number**

EP 25 20 6102

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 9 157 566 B2 (HENDERSON RANDAL LEE [US]; STOLPE DOUGLAS M [US] ET AL.) 13 October 2015 (2015-10-13) * column 8, line 11 - column 15, line 17; figures 1A-7C * | 1-15 | INV. F16L1/11 |
| A | US 3 557 840 A (MAYBEE RICHARD C) 26 January 1971 (1971-01-26) * column 2, line 24 - column 5, line 54; figures * | 1-15 | |

**TECHNICAL FIELDS SEARCHED (IPC)**

F16L

The present search report has been drawn up for all claims

| Place of search | Date of completion of the search | Examiner |
|---|---|---|
| Munich | 27 February 2026 | Cross, Alexandra |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...........................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 6102

This annex lists the patent family members relating to the patent documents cited in  the above-mentioned European search report.
The members are as contained in the European Patent Office EDP file on
The European Patent Office is in no way liable for these particulars which are merely given for the purpose of information.

27-02-2026

| Patent document cited in search report | | Publication date | Patent family member(s) | | Publication date |
|---|---|---|---|---|---|
| US 9157566 | B2 | 13-10-2015 | BR | 112014028000 A2 | 27-06-2017 |
| | | | EP | 2847508 A1 | 18-03-2015 |
| | | | US | 2014023809 A1 | 23-01-2014 |
| | | | WO | 2013170250 A1 | 14-11-2013 |
| US 3557840 | A | 26-01-1971 | DE | 1923421 A1 | 27-11-1969 |
| | | | GB | 1240363 A | 21-07-1971 |
| | | | US | 3557840 A | 26-01-1971 |

EPO FORM P0459

For more details about this annex : see Official Journal of the European Patent Office, No. 12/82